# EUROPÄISCHE PATENTSCHRIFT

(11) **EP 1 495 527 B1**
(45) Veröffentlichungstag und Bekanntmachung des Hinweises auf die Patenterteilung: **23.01.2008**
(21) Anmeldenummer: 03745742.1
(22) Anmeldetag: 29.01.2003
(51) Int. Cl.: H02K 1/28, H02K 1/27

(54) **ELEKTRISCHE MASCHINE, INSBESONDERE PERMANENTMAGNET-ERREGTER MOTOR**
ELECTRICAL MACHINE, IN PARTICULAR PERMANENT MAGNET EXCITED MOTOR
MACHINE ELECTRIQUE, NOTAMMENT MOTEUR EXCITE PAR AIMANT PERMANENT

(30) Priorität: 06.04.2002 DE 10215251
(43) Veröffentlichungstag der Anmeldung: 12.01.2005
(73) Patentinhaber: ROBERT BOSCH GMBH, 70442 Stuttgart (DE)
(72) Erfinder: DOMMSCH, Hans-Peter, 77830 Buehlertal (DE); KASTINGER, Guenter, 76571 Gaggenau-Sulzbach (DE)
(86) Internationale Anmeldenummer: PCT/DE2003/000236
(87) Internationale Veröffentlichungsnummer: WO 2003/085802

(56) Entgegenhaltungen:
- EP-A- 0 549 430
- EP-A- 0 952 657
- DE-A- 4 107 602
- DE-A- 4 400 614
- US-A- 4 837 472

## Beschreibung

### Stand der Technik

Die Erfindung betrifft eine elektrische Maschine, insbesondere einen Permanentmagnet erregten Motor mit einem umlaufenden Rotor nach dem Oberbegriff des Anspruchs 1.

Mit der EP 0549430 A1 ist ein Rotor einer permanentmagneterregten elektrischen Maschine bekannt gewordenen, auf dem ringförmig ausgebildete Permanentmagnete angeordnet sind. Die Permanentmagnete sind durch Halteringe fixiert, die zur zuverlässigeren Fixierung schräge Flächen zu korrespondierender Flächen der Permanentmagnete aufweisen.

Unter den elektrischen Maschinen, die als Motor oder Generator arbeiten, gibt es Baugruppen, deren Rotor Permanentmagnete aufweist, welche am Umfang des Rotors Pole mit abwechselnder Polarität ausbilden und die in der Regel mit elektrischen Spulen eines den Rotor konzentrisch umgebenden Stators zusammenwirken. Dabei wird in den elektrischen Spulen des Stators ein Drehfeld erzeugt, welches den Rotor mit synchroner Drehzahl mitnimmt. Je nach Ansteuerung der Statorspulen können diese Maschinen auch als sogenannte Schrittmotore eingesetzt werden, welche beispielsweise zum Antrieb von Stellantrieben vorgegebene Positionen exakt ansteuern können. Eine Baugruppe dieser elektrischen Maschinen mit Permanentmagneterregung ist in der Literatur als Transversalflussmaschine bekannt. So zum Beispiel "Michael Bork-Bauformen von Transversalflussmaschinen - Diss. 82, RWTH Aachen; Shaker-Verlag Aachen, 1997; Seite 6ff." Dabei bilden die Permanentmagnete des Rotors am Rotorumfang zwei voneinander beabstandete Ringanordnungen, die mit U-förmigen Magnetjochen im Stator der Maschinen zusammenwirken.

Bei den verschiedenen Ausführungsformen der Rotoren mit Permanentmagneterregung werden die Permanentmagnete beispielsweise über den Rotorumfang als Ring aufgeklebt oder vergossen und danach aufmagnetisiert.

Dies hat den Nachteil, dass für die Aufmagnetisierung eine spezielle Magnetisiervorrichtung erforderlich ist. Ferner sind die Übergänge der abwechselnden Polung entlang der Rotoroberfläche durch diese Art der Aufmagnetisierung ungenau, wodurch die Maschinenleistung beeinträchtigt wird. Außerdem lassen sich mit derartigen Magnetisiervorrichtungen die einzelnen Permanentmagnete nicht beliebig schmal ausbilden, so dass bei einer vorgegebenen Polzahl gegebenenfalls größere Rotordurchmesser erforderlich sind, als dies für die Leistung der Maschine nötig wäre. Bei anderen Ausführungsformen des Rotors, bei denen vorgefertigte Rohrabschnitte aus Magnetmaterial mit vormagnetisierten Polen auf den Rotor aufgeschoben und fixiert werden, besteht ferner aufgrund der Materialsprödigkeit die Gefahr von Materialbrüchen durch innere Spannungen nach dem Anbringen der Magnetringe am Rotor. Beim Einsatz solcher Maschinen in sicherheitsrelevanten Bereichen, zum Beispiel im Kraftfahrzeug als Stellmotor einer elektrischen Lenkung, kann es erforderlich sein, den Magnetring noch durch ein Schutzrohr aus unmagnetischem Material abzudecken, um einen Ausfall der Maschine durch einen Bruch eines Magnetringes zu vermeiden.

Mit der vorliegenden Lösung wird angestrebt, die Anbringung der Permanentmagnete am Rotor derartiger elektrischer Maschinen so zu verbessern, dass die vorgenannten Mängel weitgehend vermieden werden können.

### Vorteile der Erfindung

Die erfindungsgemäße elektrische Maschine mit den kennzeichnenden Merkmalen des unabhängigen Anspruchs 1 hat den Vorteil, dass durch die Aufgliederung der Magnetringe des Rotors in Einzelmagnete diese einfach und maßgenau hergestellt und gleichmäßig stark als Nordpol oder Südpol aufmagnetisiert werden können. Ein weiterer Vorteil besteht darin, dass die Einzelmagnete ohne innere Spannungen am Rotorumfang leicht montiert und dabei genau positioniert werden können. Dabei werden ferner umweltbelastende Zusatzwerkstoffe wie Kleber oder Gießharze vermieden. Ein weiterer, wesentlicher Vorteil besteht darin, dass bei der Aufnahme der axialen Enden der Einzelmagnete in beidseitigen Rahmen durch eine axiale Einspannung die Fertigungstoleranzen der Permanentmagnete und des Trägers ausgeglichen werden. Ein Schutz gegen ein Abschleudern der Permanentmagnete durch Zentrifugalkräfte wird dadurch erzielt, dass die Rahmen jeweils stirnseitig angeordnete Aussparungen für die Aufnahme je eines axialen Endes der Permanentmagnete aufweisen. Für eine allseitige Fixierung der Permanentmagnete am Rotorumfang ist vorgesehen, dass die Permanentmagnete mit ihren Enden in den Aussparungen radial, axial und in Umfangsrichtung festgelegt sind. Eine genaue, Fertigungstoleranzen ausgleichende Positionierung der Permanentmagnete in Umfangsrichtung wird in vorteilhafter Weise dadurch erzielt, dass die Enden der Permanentmagnete an ihren gegenüberliegenden Seiten mit Formschrägen versehen sind, welche die Enden zur Stirnseite hin verjüngen und von entsprechend negativen Formschrägen in den Aussparungen der Rahmen formschlüssig aufgenommen sind. Eine genaue, Fertigungstoleranzen ausgleichende axiale und radiale Positionierung der Permanentmagnete auf dem Träger wird in vorteilhafter Weise dadurch erreicht, dass die Enden der Permanentmagnete am Außenumfang mit einer Förmschräge versehen sind, welche die Enden zur Stirnseite hin verjüngen und von einer entsprechend negativen Formschräge in den Aussparungen formschlüssig aufgenommen sind.

Die erfindungsgemäße elektrische Maschine mit den kennzeichnenden Merkmalen des unabhängigen Anspruchs 2 hat den Vorteil, dass es alternativ zu den vorerwähnten Formschrägen zur allseitigen Fixierung der Permanentmagnete in vereinfachter Weise auch möglich ist, dass die Enden der Permanentmagnete an ihren zwei äußeren axial verlaufenden Kanten mit je einer zur Stirnseite hin zunehmenden Fase versehen sind, die jeweils mit einer entsprechend negativen Fase in den Aussparungen der Rahmen formschlüssig zusammenwirken. Dabei sind zweckmäßigerweise die negativen Fasen der Rahmen jeweils auf der Innenseite von axial zum Permanentmagneten hin gerichteten Klauen ausgebildet, welche die Aussparungen jeweils beidseitig begrenzen.

Durch die-in den Unteransprüchen aufgeführten Maßnahmen ergeben sich vorteilhafte Weiterbildungen und Verbesserungen der im Hauptanspruch angegebenen Merkmale. Zur Vermeidung gefährlicher Biegespannungen in den Permanentmagneten werden diese unabhängig voneinander gleichmäßig stark ; eingespannt, indem mindestens der Rahmen an einem der axialen Enden der Permanentmagnete am Außenumfang zwischen den jeweils benachbarten Aussparungen mit radial nach innen verlaufenden Schlitzen versehen ist. Dadurch ist es möglich, den Rahmen durch die Schlitze in radial nach außen gerichtete, axial federnde Lamellen aufzuteilen, die an ihrer den Permanentmagneten zugewandten Stirnseite jeweils mit einer der Aussparungen versehen ist, in die jeweils ein axiales Ende der Permanentmagnete mit einer Keilkraft der axial federnd vorgespannten Lamellen festgespannt ist. Für eine einfache Herstellung und Montage sowie für eine robuste Ausführung des Rahmens an den anderen axialen Enden der Permanentmagnete ist dieser als un geschlitzter Ringrahmen ausgebildet, dessen stirnseitig angeordnete Aussparungen jeweils ein axiales Ende der Permanentmagnete formschlüssig aufnehmen.

Dies ermöglicht zusätzlich eine absolute Positionierung der Permanentmagnete.

Bei der Anwendung der erfindungsgemäßen Rotorausbildung in Transversalflussmaschinen bilden zweckmäßigerweise die Permanentmagnete mindestens zwei Ringanordnungen, die voneinander einen festen axialen Abstand haben. In zweckmäßiger Weise ist dabei der Abstand der beiden Ringanordnungen durch einen gemeinsamen ungeschlitzten Ringrahmen vorgegeben, auf dessen beiden Stirnseiten jeweils Aussparungen zur formschlüssigen Aufnahme je eines axialen Endes der Permanentmagnete angeordnet sind. Sowohl bei einer zweifachen, als auch bei einer mehrfachen Ringanordnung der Permanentmagnete ist es zweckmäßig, dass nur die auf den beiden Stirnseiten des Rotors angeordneten Rahmen mit radialen Schlitzen und axial federnden Lamellen versehen sind. Ein einfacher und robuster konstruktiver Aufbau des Rotors ergibt sich dadurch, dass die Permanentmagnete und der Ringrahmen auf einen gemeinsamen Träger aufgesetzt und befestigt sind. Dabei ist der Träger in zweckmäßiger Weise als magnetischer Rückschlussring für die Permanentmagnete ausgebildet.

### Zeichnung

Die Erfindung wird im Folgenden beispielhaft anhand der Figuren näher erläutert.

Es zeigen
- Figur 1: ein erstes Ausführungsbeispiel einer elektrischen Maschine mit einem permanentmagneterregten Rotor als Ausbruch in raumbildlicher Darstellung,
- Figur 2: die Anordnung mehrerer Permanentmagnete am Rotorumfang vor dem Anbringen der ihnen zugeordneten Rahmen in einem raumbildlich dargestellten Ausbruch und
- Figur 3: eine alternative Ausführung zur Befestigung der Permanentmagnete am Rotor.

### Beschreibung der Ausführungsbeispiele

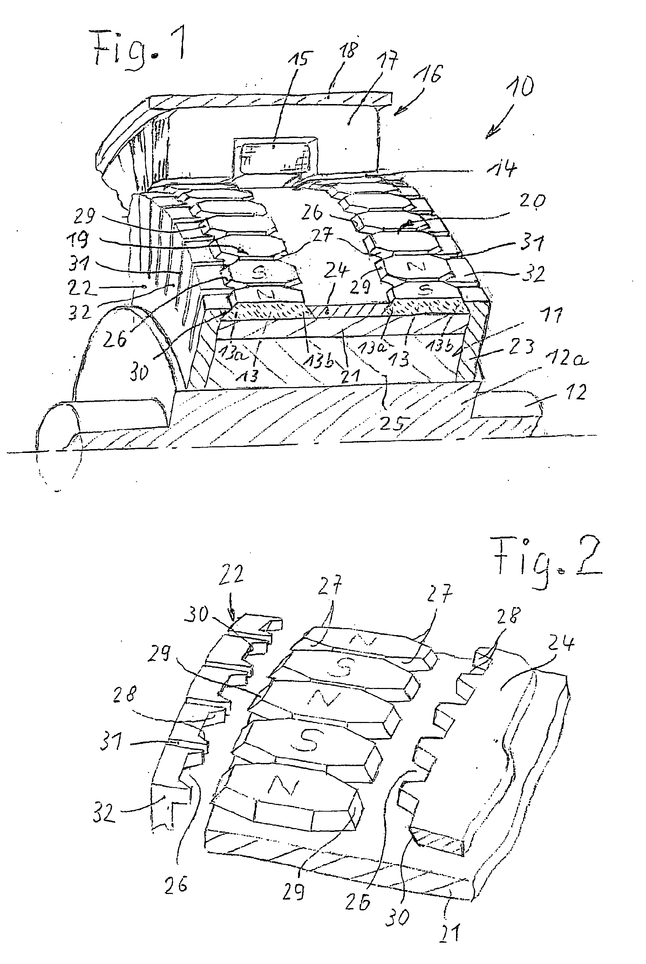

Figur 1 zeigt in einem perspektivischen Ausbruch eine elektrische Maschine 10 im Längsschnitt bis zur Mittelachse, die zur Baugruppe der Transversalflussmotoren gehört. Die Maschine hat einen umlaufenden Rotor 11, mit einer Rotorwelle 12. Über seinen Umfang ist eine Vielzahl von Permanentmagneten 13 mit abwechselnder Polarität angeordnet, wobei die Permanentmagnete 13 in radialer Richtung magnetisiert sind. Die Permanentmagnete 13 wirken über einen Arbeitsluftspalt 14 mit einer elektrischen Ringspule 15 eines Stators 16 zusammen, der den Rotor 11 konzentrisch umgibt und dessen Blechpakete 17 einerseits den Permanentmagneten 13 gegenüberliegen und andererseits die Ringspule 15 U-förmig einfassen. Stator-Blechpakete und Ringspule werden über ein entsprechendes Jochgehäuse 18 gehalten und positioniert.

Die Permanentmagnete 13 sind in zwei Ringanordnungen 19, 20 als Einzelmagnete über den Umfang des Rotors 11 gleichmäßig verteilt nebeneinander angeordnet. Sie liegen mit ihrer Unterseite auf einem ringförmigen Träger 21 auf, der als magnetischer Rückschlussring für die Permanentmagnete 13 aus weichmagnetischem Material ausgebildet ist. Die Permanentmagnete 13 sind ferner an ihren axialen Enden 13a, 13b jeweils in einem ringförmigen Rahmen 22, 23, 24 aus magnetisch unwirksamem Material, zum Beispiel aus temperaturfesten, faserverstärkten Kunststoff eingespannt. Der Rückschlussring 21 ist auf einem Tragring 25 befestigt, der seinerseits auf einem Abschnitt 12a der Rotorwelle 12 fixiert ist. Auf diesem Abschnitt 12a der Rotorwelle sind ferner die zwei außen liegenden Rahmen 22, 23 stirnseitig aufgepresst, und der mittlere Rahmen ist als Ringrahmen 24 auf dem Rückschlussring 21 aufgepresst. Die Rahmen 22, 23 und 24 sowie der Rückschlussring als Träger 21 sind somit mittelbar oder unmittelbar auf der Rotorwelle 12 befestigt.

Zur Aufnahme der an den Permanentmagneten 13 angreifenden Zentrifugalkräfte weisen die Rahmen 22, 23, 24 jeweils stirnseitig angeordnete Aussparungen 26 auf, in denen je ein axiales Ende 13a bzw. 13b der Permanentmagnete 13 aufgenommen ist. Die Aussparungen 26 sind dabei jeweils derart konstruktiv ausgebildet, dass die Enden 13a bzw. 13b der Permanentmagnete 13 darin sowohl radial, axial als auch in Umfangsrichtung festgelegt sind. Für eine exakte Positionierung der Permanentmagnete 13 nebeneinander sind deren Enden 13a bzw. 13b an ihren gegenüberliegenden Seiten mit Formschrägen 27 versehen, durch die die Permanentmagnete 13 zur Stirnseite hin verjüngt werden. Diese Formschrägen 27 werden in den Aussparungen 26 jeweils von entsprechenden negativen Formschrägen 28 (Fig. 2) der Rahmen 22, 23, 24 formschlüssig aufgenommen. Für die axiale Festlegung der Permanentmagnete 13 und für die ausreichende Anpressung der Permanentmagnete auf dem Rückschlussring 21 sind die Enden 13a bzw. 13b der Permanentmagnete 13 stirnseitig jeweils mit einer weiteren Formschräge 29 versehen, durch welche die axiale Länge der Permanentmagnete 13 zur Außenseite hin abnimmt. Eine entsprechend negative Formschräge 30 ist in den Aussparungen 26 der Rahmen 22, 23 und 24 ausgebildet, so dass die Permanentmagnete auch in axialer Richtung in den Aussparungen 26 formschlüssig aufgenommen sind. Um bei einem möglichst gleich starken Einspannen aller Permanentmagnete 13 durch die Aussparungen 26 der Rahmen 22, 23 und 24 auch Fertigungstoleranzen ausgleichen zu können, sind die auf den beiden Stirnseiten des Rotors 11 angeordneten Rahmen 22, 23 an ihrem Außenumfang zwischen den jeweils benachbarten Aussparungen 26 mit radial nach innen verlaufenden Schlitzen 31 versehen. Durch diese Schlitze 31 werden die Rahmen 22 und 23 in radial nach außen gerichtete Lamellen 32 aufgeteilt, so dass jede Lamelle 32 an ihrer den Permanentmagneten 13 zugewandten Stirnseite mit jeweils einer Aussparung 26 versehen ist. Aufgrund des Materials der Rahmen 22 und 23 und je nach Länge der Schlitze 31 sind die Lamellen 32 mehr oder weniger stark axial federnd ausgebildet. Dadurch lassen sich die Permanentmagnete 13 zum Ausgleich von Fertigungstoleranzen unabhängig voneinander durch eine Keilkraft der axial federnden Lamellen 32 an den Enden 13a und 13b auf dem Rückschlussring 21 festspannen.

Aus Figur 1 ist zu entnehmen, dass die beiden Ringanordnungen 19, 20 der Permanentmagnete 13 voneinander einen festen, über den Umfang konstanten axialen Abstand haben, der durch einen gemeinsamen Rahmen in Form eines Ringrahmens 24 vorgegeben ist. Dieser ungeschlitzte Ringrahmen 24 ist auf seinen beiden Stirnseiten jeweils mit Aussparungen 26 zur formschlüssigen Aufnahme je eines axialen Endes 13b der Permanentmagnete 13 versehen. Hierbei reicht es aus, dass zur gleichmäßigen axialen Einspannung aller Permanentmagnete 13 nur die auf den beiden Stirnseiten des Rotors 11 angeordneten Rahmen 22 und 23 mit radialen Schlitzen 31 und axial federnden Lamellen 32 versehen sind. Die Permanentmagnete 13 und der Ringrahmen 24 sind dabei auf dem magnetischen Rückschlussring 21 als gemeinsamen Träger aufgesetzt und befestigt.

Figur 2 zeigt einen Ausschnitt des Rotors 11 aus Figur 1 vor dem Einspannen der Permanentmagnete 13 durch die zwei stirnseitig dazu angeordneten Rahmen 22 und 24 mit den vorerwähnten Formschrägen 27, 28, 29 und 30.

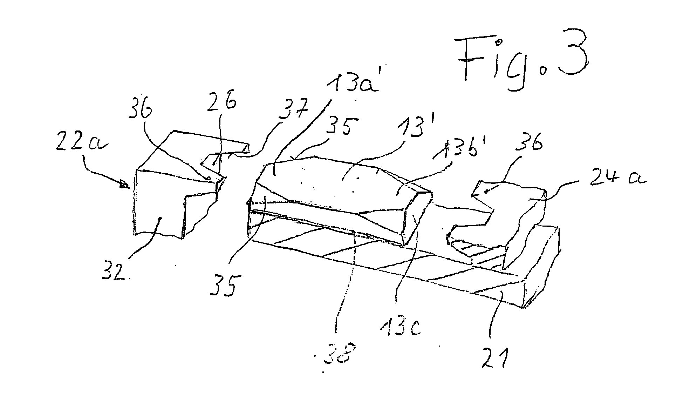

In Figur 3 ist als weiteres Ausführungsbeispiel der Erfindung eine etwas abgeänderte Aufnahme der axialen Enden 13a' und 13b' der Permanentmagnete 13' vor der Montage raumbildlich dargestellt. Bei dieser Lösung sind die Enden 13a' und 13b' der Permanentmagnete 13' an ihren zwei äußeren axial verlaufenden Kanten mit je einer Fase 35 versehen, die jeweils zur Stirnseite 13c der Permanentmagnete 13' hin zunehmen, so dass sich die Permanentmagnete 13' zu ihren Enden hin im Querschnitt beidseitig verjüngen. Auf diese Fasen 35 greifen Klauen 36, die an den Rahmen 22a, 24a axial zu dem jeweiligen Permanentmagneten 13' hin gerichtet sind und die Aussparungen 26 jeweils beidseitig begrenzen. Auf der Innenseite dieser Klauen 36 ist jeweils eine zu den Fasen 35 der Permanentmagnete 13' negative Fase 37 ausgebildet, so dass die Fasen 35 der Permanentmagnete 13' mit den negativen Fasen 37 in den Aussparungen 26 der Rahmen 22a und 24a formschlüssig zusammenwirken. Ein u. U. durch Unebenheiten des Rückschlussringes 21 oder der Unterseite 13d der Permanentmagnete 13' entstehender kleiner Spalt 38 kann gegebenenfalls zur Minimierung der magnetischen Verluste durch ein magnetisch wirksames Material, zum Beispiel durch ein Gel aufgefüllt und so eine flächige Auflage erzielt werden.

## Patentansprüche

1. Elektrische Maschine, insbesondere Permanentmagnet erregter Motor (10), mit einem umlaufenden, eine Rotorwelle (12) aufweisenden Rotor (11), der über seinen Umfang ringförmig angeordnete Permanentmagnete (13) vorzugsweise abwechselnder Polarität aufweist, die insbesondere mit Spulen (15) eines den Rotor umgebenden Stators (16) zusammenwirken, wobei die Permanentmagnete (13, 13') als über den Umfang des Rotors (11) gleichmäßig verteilt nebeneinander angeordnete Einzelmagnete auf einem ringförmigen Träger (21) aufliegen und an ihren axialen Enden (13a, 13b, 13a', 13b')jeweils in einem ringförmigen Rahmen (22, 22a, 23, 24, 24a) aus magnetisch unwirksamem Material eingespannt sind, wobei der Träger (21) und/oder die Rahmen (22, 22a, 23, 24, 24a) auf der Rotorwelle (12) befestigt sind und die Rahmen (22, 22a, 23, 24, 24a) jeweils stirnseitig angeordnete Aussparungen (26) für die Aufnahme je eines axialen Endes (13a, 13', 13b, 13b') der Permanentmagnete (13, 13') aufweisen, wodurch die Permanentmagnete (13, 13') mit ihren Enden (13a, 13a', 13b, 13b') in den Aussparungen (26) radial, axial und in Umfangsrichtung festgelegt sind, **dadurch gekennzeichnet, dass** die Enden (13a, 13b) der Permanentmagnete (13) an ihren gegenüberliegenden Seiten mit Formschrägen (27) versehen sind, welche die Enden (13a, 13b) zur Stirnseite hin verjüngen und von entsprechend negativen Formschrägen (28) in den Aussparungen (26) der Rahmen (22, 23, 24) formschlüssig aufgenommen sind und die Enden (13a, 13b) der Permanentmagnete (13) auf ihrer Stirnseite (13c) mit einer weiteren Formschräge (29) versehen sind, durch welche die axiale Länge der Permanentmagnete (13) nach außen hin abnimmt und die von einer entsprechenden negativen Formschräge (30) in den Aussparungen (26) formschlüssig aufgenommen sind.

2. Elektrische Maschine, insbesondere Permanentmagnet erregter Motor (10), mit einem umlaufenden, eine Rotorwelle (12) aufweisenden Rotor (11), der über seinen Umfang ringformig angeordnete Permanentmagnete (13) vorzugsweise abwechselnder Polarität aufweist, die insbesondere mit Spulen (15) eines den Rotor umgebenden Stators (16) zusammenwirken, wobei die Permanentmagnete (13, 13') als über den Umfang des Rotors (11) gleichmäßig verteilt nebeneinander angeordnete Einzelmagnete auf einem ringförmigen Träger (21) aufliegen und an ihren axialen Enden (13a, 13b, 13a', 13b')jeweils in einem ringförmigen Rahmen (22, 22a, 23, 24, 24a) aus magnetisch unwirksamem Material eingespannt sind, wobei der Träger (21) und/oder die Rahmen (22, 22a, 23, 24, 24a) auf der Rotor welle (12) befestigt sind und die Rahmen (22, 22a, 23, 24, 24a) jeweils stirnseitig angeordnete Aussparungen (26) für die Aufnahme je eines axialen Endes (13a, 13', 13b, 13b') der Permanentmagnete (13,13') aufweisen, wodurch die Permanentmagnete (13,13') mit ihren Enden (13a, 13a', 13b, 13b') in den Aussparungen (26) radial, axial und in Umfangsrichtung festgelegt sind, **dadurch gekennzeichnet, dass** die Enden der Permanentmagnete (13')an ihren zwei äußeren axial verlaufenden Kanten mit je einer zur Stirnseite hin zunehmenden Fase (35) versehen sind, die jeweils mit einer entsprechend negativen Fase (37) in den Aussparungen (26) der Rahmen (22^{c}, 23^{c}) formschlüssig zusammenwirken.

3. Elektrische Maschine nach Anspruch 2, **dadurch gekennzeichnet, dass** die negativen Fasen (37) jeweils auf der Innenseite von axial zum Permanentmagneten (13') hin gerichteten Klauen (36) ausgebildet sind, welche die Aussparungen (26) jeweils beidseitig begrenzen.

4. Elektrische Maschine nach einem der Ansprüche 1 bis 3, **dadurch gekennzeichnet, dass** mindestens der Rahmen (22, 23) an einem der axialen Enden (13a, 13b) der Permanentmagnete (13) am Außenumfang zwischen den jeweils benachbarten Aussparungen (26) mit radial nach innen verlaufenden Schlitzen (31) versehen ist.

5. Elektrische Maschine nach Anspruch 4, **dadurch gekennzeichnet, dass** der Rahmen (22, 23) durch die Schlitze (31) in radial nach außen gerichtete, axial federnde Lamellen (32) aufgeteilt ist, die an ihrer den Permanentmagneten (13) zugewandten Stirnseite jeweils mit einer der Aussparungen (26) versehen ist, und in die jeweils ein Permanentmagnet (13) mit seinem axialen Ende (13a) mittels einer Keilkraft der axial federnden Lamellen (32) festgespannt ist.

6. Elektrische Maschine nach Anspruch 5, **dadurch gekennzeichnet, dass** der Rahmen (24) an dem anderen axialen Ende (13b) der Permanentmagnete (13) als ungeschlitzter Ringrahmen (24) ausgebildet ist, dessen stirnseitig angeordnete Aussparungen (26) jeweils ein axiales Ende (13b) der Permanentmagnete (13) formschlüssig aufnehmen.

7. Elektrische Maschine nach einem der vorherigen Ansprüche, **dadurch gekennzeichnet, dass** die Permanentmagnete (13) mindestens zwei Ringanordnungen (19) bilden, die voneinander einen über den Umfang konstanten axialen Abstand haben.

8. Elektrische Maschine nach Anspruch 6 und 7, **dadurch gekennzeichnet, dass** der Abstand der beiden Ringanordnungen (19) durch einen gemeinsamen, ungeschlitzten Ringrahmen (24) vorgegeben ist, auf dessen beiden Stirnseiten jeweils Aussparungen (26) zur formschlüssigen Aufnahme je eines axialen Endes (13b) der Permanentmagnete (13) angeordnet sind.

9. Elektrische Maschine nach Anspruch 8, **dadurch gekennzeichnet, dass** nur die auf den beiden Stirnseiten des Rotors (11) angeordneten Rahmen (22, 23) mit radialen Schlitzen (31) und axial federnden Lamellen (32) versehen sind.

10. Elektrische Maschine nach Anspruch 6 oder 8, **dadurch gekennzeichnet, dass** die Permanentmagnete (13,13') und der Ringrahmen (24, 24') auf einem gemeinsamen Träger (21) aufgesetzt und befestigt sind.

11. Elektrische Maschine nach einem der vorherigen Ansprüche, **dadurch gekennzeichnet, dass** der Träger (21) als magnetischer Rückschlussring für die Permanentmagnete (13, 13') ausgebildet ist.

## Claims

1. Electrical machine, in particular motor (10) with permanent-magnet excitation, comprising a rotating rotor (11) which has a rotor shaft (12) and permanent magnets (13) which are preferably of alternating polarity, are arranged in a ring-like manner over its circumference and, in particular, interact with coils (15) of a stator (16) which surrounds the rotor, with the permanent magnets (13, 13'), as individual magnets which are arranged next to one another in a manner uniformly distributed over the circumference of the rotor (11), resting on a ring-like support (21) and at their axial ends (13a, 13b, 13a', 13b') in each case being clamped-in in a ring-like frame (22, 22a, 23, 24, 24a) which is composed of a magnetically inactive material, with the support (21) and/or the frames (22, 22a, 23, 24, 24a) being fixed on the rotor shaft (12) and the frames (22, 22a, 23, 24, 24a) in each case having recesses (26), which are arranged on an end face, for holding in each case an axial end (13a, 13a', 13b, 13b') of the permanent magnets (13, 13'), as a result of which the permanent magnets (13, 13') are secured in the recesses (26) radially, axially and in the circumferential direction by their ends (13a, 13a', 13b, 13b'), **characterized in that** the ends (13a, 13b) of the permanent magnets (13) are provided on their opposite sides with shaped chamfers (27) which taper the ends (13a, 13b) towards the end face and are held in a form-fitting manner in the recesses (26) in the frames (22, 23, 24) by correspondingly negative shaped chamfers (28), and the ends (13a, 13b) of the permanent magnets (13) are provided on their end face (13c) with a further shaped chamfer (29) on account of which the axial length of the permanent magnets (13) decreases towards the outside and which is held in a form-fitting manner in the recesses (26) by a correspondingly negative shaped chamfer (30).

2. Electrical machine, in particular motor (10) with permanent-magnet excitation, comprising a rotating rotor (11) which has a rotor shaft (12) and permanent magnets (13) which are preferably of alternating polarity, are arranged in a ring-like manner over its circumference and, in particular, interact with coils (15) of a stator (16) which surrounds the rotor, with the permanent magnets (13, 13'), as individual magnets which are arranged next to one another in a manner uniformly distributed over the circumference of the rotor (11), resting on a ring-like support (21) and at their axial ends (13a, 13b, 13a', 13b') in each case being clamped-in in a ring-like frame (22, 22a, 23, 24, 24a) which is composed of a magnetically inactive material, with the support (21) and/or the frames (22, 22a, 23, 24, 24a) being fixed on the rotor shaft (12) and the frames (22, 22a, 23, 24, 24a) in each case having recesses (26), which are arranged on an end face, for holding in each case an axial end (13a, 13a', 13b, 13b') of the permanent magnets (13, 13'), as a result of which the permanent magnets (13, 13') are secured in the recesses (26) radially, axially and in the circumferential direction by their ends (13a, 13a', 13b, 13b'), **characterized in that** the ends of the permanent magnets (13'), at their two outer axially running edges, are each provided with a bevel (35) which increases towards the end face, which bevels in each case interact in a form-fitting manner with a correspondingly negative bevel (37) in the recesses (26) in the frames (22', 23').

3. Electrical machine according to Claim 2, **characterized in that** the negative bevels (37) are in each case formed on the inside of claws (36) which are directed axially towards the permanent magnet (13') and bound the recesses (26) on both sides in each case.

4. Electrical machine according to one of Claims 1 to 3, **characterized in that** at least the frame (22, 23) is provided with radially inwardly running slots (31) on one of the axial ends (13a, 13b) of the permanent magnets (13) on the outer circumference between the in each case adjacent recesses (26).

5. Electrical machine according to Claim 4, **characterized in that** the frame (22, 23) is divided by the slots (31) into radially outwardly directed, axially sprung laminations (32) which are in each case provided with one of the recesses (26) on their end face which faces the permanent magnets (13), and in which a permanent magnet (13) is in each case firmly clamped by its axial end (13a) by means of a wedge force of the axially sprung laminations (32).

6. Electrical machine according to Claim 5, **characterized in that** the frame (24) is formed as a slot-free annular frame (24) at the other axial end (13b) of the permanent magnets (13), the recesses (26) in the said annular frame which are arranged on an end face in each case holding an axial end (13b) of the permanent magnets (13) in a form-fitting manner.

7. Electrical machine according to one of the preceding claims, **characterized in that** the permanent magnets (13) form at least two ring arrangements (19) which are at an axial distance from one another which is constant over the circumference.

8. Electrical machine according to Claims 6 and 7, **characterized in that** the distance between the two ring arrangements (19) is predefined by a common, slot-free annular frame (24) which has arranged on each of its two end faces recesses (26) for holding in each case an axial end (13b) of the permanent magnets (13) in a form-fitting manner.

9. Electrical machine according to Claim 8, **characterized in that** only the frames (22, 23) which are arranged on the two end faces of the rotor (11) are provided with radial slots (31) and axially sprung laminations (32).

10. Electrical machine according to Claim 6 or 8, **characterized in that** the permanent magnets (13, 13') and the annular frame (24, 24') are placed and fixed on a common support (21).

11. Electrical machine according to one of the preceding claims, **characterized in that** the support (21) is in the form of a magnetic return ring for the permanent magnets (13, 13').

## Revendications

1. Machine électrique, notamment moteur (10) excité par des aimants permanents comprenant
un rotor (11) tournant, ayant un arbre de rotor (12) et des aimants permanents (13) répartis selon une forme d'anneau à sa périphérie, avec de préférence une alternance de polarité, ces aimants coopérant notamment avec des bobines (15) d'un stator (16) entourant le rotor, les aimants permanents (13, 13') étant des aimants séparés, juxtaposés, répartis régulièrement à la périphérie du rotor (11), ces aimants s'appuyant sur un support (21) en forme d'anneau et leurs extrémités axiales (13a, 13b, 13a', 13b') sont serrées respectivement dans un cadre annulaire (22, 22a, 23, 24, 24a) en une matière magnétiquement neutre,
le support (21) et/ou les cadres (22, 22a, 23, 24, 24a) étant fixés sur l'arbre de rotor (12) et les cadres (22, 22a, 23, 24, 24a) ayant des cavités (26) disposées de manière frontale pour recevoir chacune une extrémité axiale (13a, 13b, 13a', 13b') des aimants permanents (13, 13'),
les aimants permanents (13, 13') étant fixés par leurs extrémités (22, 22a, 23, 24, 24a) dans les cavités (26), radialement et axialement ainsi que dans la direction périphérique,
**caractérisée en ce que**
les extrémités (13a, 13b) des aimants permanents (13) ont des formes de rampes (27) sur leurs extrémités opposées qui diminuent les extrémités (13a, 13b) en direction de la face frontale et qui sont reçues selon des liaisons de forme par des formes de rampes (28) négatives correspondantes dans les cavités (26) des cadres (22, 23, 24) et les extrémités (13a, 13b) des aimants permanents (13) sont munies d'autres rampes (29) sur leur face frontale (13c) faisant diminuer la longueur axiale des aimants permanents (13) vers l'extérieur et qui sont reçues par une liaison de forme par des rampes de forme négative (30) dans les cavités (26).

2. Machine électrique, notamment moteur (10) excité par des aimants permanents comprenant
un rotor (11) en rotation, ayant un arbre de rotor (12) et des aimants permanents (13) répartis selon une forme d'anneau à sa périphérie, avec de préférence une alternance de polarité, ces aimants coopérant notamment avec des bobines (15) d'un stator (16) entourant le rotor,
les aimants permanents (13, 13') étant des aimants séparés, juxtaposés, répartis régulièrement à la périphérie du rotor (11), ces aimants s'appuyant sur un support (21) en forme d'anneau et leurs extrémités axiales (13a, 13b, 13a', 13b') sont serrées respectivement dans un cadre annulaire (22, 22a, 23, 24, 24a) en une matière magnétiquement neutre,
le support (21) et/ou les cadres (22, 22a, 23, 24, 24a) étant fixés sur l'arbre de rotor (12) et les cadres (22, 22a, 23, 24, 24a) ayant des cavités (26) disposées de manière frontale pour recevoir chacune une extrémité axiale (13a, 13b, 13a', 13b') des aimants permanents (13, 13'),
les aimants permanents (13, 13') étant fixés par leurs extrémités (22, 22a, 23, 24, 24a) dans les cavités (26), radialement et axialement ainsi que dans la direction périphérique,
**caractérisée en ce que**
les extrémités des aimants permanents (13') comportent au niveau de leurs deux arêtes axialement extérieures, chacune un congé (35) diminuant en direction de la face frontale, et ces congés coopèrent par une liaison par la forme avec un congé négatif (37), correspondant, des cavités (26) des cadres (22', 23).

3. Machine électrique selon la revendication 2,
**caractérisée en ce que**
les congés négatifs (37) sont réalisés respectivement sur le côté intérieur de griffes (36) dirigées axialement vers les aimants permanents (13'), ces griffes délimitant des deux côtés les cavités (26).

4. Machine électrique selon l'une des revendications 1 à 3,
**caractérisée en ce qu'**
au moins le cadre (22, 23) comporte à l'une des extrémités axiales (13a, 13b) des aimants permanents (13), à la périphérie extérieure entre les cavités (26) respectives voisines, des fentes (31) dirigées radialement vers l'intérieur.

5. Machine électrique selon la revendication 4,
**caractérisée en ce que**
le cadre (22, 23) est divisé axialement par les fentes (31) en lamelles (32) élastiques, dirigées radialement vers l'extérieur, et dont la face frontale tournée vers les aimants permanents (16) comporte chacune l'une des cavités (26) et chaque fois un aimant permanent (13) est serré par son extrémité axiale (13a) à l'aide de la force de coin exercée par les lamelles élastiques axialement (32) dans l'une respective des cavités (26).

6. Machine électrique selon la revendication 5
**caractérisée en ce que**
le cadre (24) est réalisé sous la forme d'un cadre annulaire (24) non fendu à l'autre extrémité axiale (13b) de l'aimant permanent (13), et dont les cavités (26) prévues sur la face frontale, reçoivent chacune par une liaison par la forme, une extrémité axiale (13b) des aimants permanents (13).

7. Machine électrique selon l'une des revendications précédentes,
**caractérisée en ce que**
les aimants permanents (13) forment au moins deux dispositions en anneaux (19) séparées d'une distance axiale constante sur la périphérie.

8. Machine électrique selon les revendications 6 et 7,
**caractérisée en ce que**
la distance des deux dispositions en anneaux (19) est prédéfinie par un cadre annulaire (24) commun, non fendu, dont les deux faces frontales sont munies chacune de découpes (26) pour recevoir, par une liaison par la forme, chacune extrémité axiale (13b) des aimants permanents (13).

9. Machine électrique selon la revendication 8,
**caractérisée en ce que**
seulement les cadres (22, 23) prévus sur les deux faces frontales du rotor (11) sont munies de fentes radiales (31) et de lamelles (32) élastiques axialement.

10. Machine électrique selon les revendications 6 ou 7,
**caractérisée en ce que**
les aimants permanents (13, 13') et les cadres annulaires (24, 24') sont rapportés et fixés sur un support commun (21).

11. Machine électrique selon l'une des revendications précédentes,
**caractérisée en ce que**
le support (21) est une bague de retour de flux magnétique pour les aimants permanents (13, 13').
